# EUROPEAN PATENT SPECIFICATION

(11) **EP 2 405 543 B1**
(45) Date of publication and mention of the grant of the patent: **31.08.2016**
(21) Application number: 10168616.0
(22) Date of filing: 06.07.2010
(51) Int. Cl.: H02B 11/04

(54) **Switchgear comprising a slidable circuit-breaker, a transformer and an electrical connector between the two**
Schaltanlage umfassend einen Einschub-Leistungsschalter, einen Transformator und einen elektrischen Steckverbinder zwischen den beiden
Installation de commutation comportant un disjoncteur amovible, un transformateur et un connecteur électrique entre les deux

(43) Date of publication of application: 11.01.2012
(73) Proprietor: ABB Technology AG, 8050 Zürich (CH)
(72) Inventor: Carelli, Vittorio, 26900 Lodi (IT); Franco, Walter-Salvatore, 24100 Bergamo (IT)
(74) Representative: De Santis, Giovanni

(56) References cited:
- DE-A1- 3 318 344
- GB-A- 375 285

## Description

The present invention relates to a switchgear apparatus comprising a connector element. In particular, the connector element is suitable for being mounted on a switchgear apparatus having a circuit breaker unit of the draw-out or withdrawable type.

The connector element is particularly suitable to be used in the Medium Voltage field, where, for the purposes of the present application, the term Medium Voltage refers to applications in the range of between 1 KV and some tens of KV, e.g. 30 kV.

A stationary electrical connector is known which is arranged in a fixed position in the switchgear and which cooperates with a movable electrical connector provided on a circuit breaker unit. The circuit breaker unit is supported by a trolley that can move from an extraction position with respect to a switchgear casing, in which the movable electrical contact is disengaged from the stationary electrical contact, to an insertion position in the switchgear casing, in which the movable electrical contact engages with the stationary electrical contact.

The stationary electrical contact comprises an oblong cylindrical body which is solid and has a first diameter whose value is substantially constant along a longitudinal axis of the cylindrical body itself.

The oblong cylindrical body has a free end and a fixing end. At the free end there is defined an electrical coupling portion which is intended to be embraced by the movable electrical contact for establishing an electrical connection of the circuit. At the fixing end there is defined a fixing flange portion which is shaped so as to enable the stationary electrical contact to be fixed to a supporting wall of the switchgear, the supporting wall being electrically non conductive.

The fixing end comprises a flange portion protruding from the oblong cylindrical body transversely to the longitudinal axis. The flange portion has a second diameter which is greater than the abovementioned first diameter.

The flange portion comprises, at a side pointing to the free end of the oblong cylindrical body, an annular side which is intended to be adhered to the supporting wall. In the supporting wall there is obtained a through-opening enabling insertion of the oblong cylindrical body but having dimensions smaller than the ones of the flange portion for preventing passage of the latter there through.

The flange portion is applied to the supporting wall by facing and adhering the annular side to a first surface of the supporting wall, the oblong cylindrical body protruding from a second surface of the supporting wall which is at an opposite side with respect to the first surface.

On the annular side there are obtained through-holes which are circumferentially distributed and suitable for receiving respective fixing screws which engage with the supporting wall.

The flange portion comprises an electrical connecting surface which is arranged opposite to the annular side. The electrical connecting surface is configured to be joined to a bus-bar connected in its turn to a transformer for the secondary supply of the electrical power. The power flows from the stationary electrical connector to the transformer via the bus-bar.

A drawback of the known stationary electrical connector above described is that during functioning it tends to get overheated and thus requires additional components, in particular proper heat-dissipating elements which have to be suitably placed around and in contact with the oblong cylindrical body in order to promote heat-dissipation. Another drawback is that the stationary electrical connector together with the heat-dissipating elements define an assembly which is structurally complicated, difficult do be fit in the switchgear and expensive to manufacture. Furthermore, the overall dimensions are undesirably rather significant.

Another drawback of the known stationary electrical connector is that a high electrical contact resistance is generated at the mutually joined surfaces in the interface zone between the flange portion and the bus-bar and in the further interface zone between the bus-bar and the transformer. Such a high electrical contact resistance implies a high heating of the electrical connector and of the parts of the switchgear in the surroundings which may be damaged or even may catch fire.

The high electrical contact resistance, furthermore, results in a poor efficiency, thus in a waste of power which is economically unacceptable.

Patent document GB375285 discloses a plug-socket contact systems mainly for use with draw-out switchgear and which comprises a contact making connector having substantially spherical contact surfaces adapted to engage inside associated cylindrical contacts which are connected to a movable gear and a supporting member, respectively.

Patent document DE3318344 discloses a high voltage system where two live electrical conductors are arranged inside a housing and are intended to make contact with one another under the control of assembly personnel working outside. To this end, one of these conductors has a contact piece which can be displaced by a shaft and can be moved into or out of engagement with a stationary contact piece which is provided on the other of the two conductors.

An object of the invention is to improve the electrical connectors for switchgears.

A further object of the invention is to provide a connector element which is structurally simplified and easy to be mounted on a switchgear apparatus.

A further object of the invention is to provide a connector element which is able to efficiently prevent overheating, thus resulting reliable and safe as well, and which provides an optimal electrical conductivity thus ensuring a noticeable electrical performance.

A still further object of the invention is to provide a connector element which enables the overall dimensions of the switchgear apparatus to be reduced.

According to the invention, there is provided a switchgear apparatus as defined in claim 1.

Further characteristics and advantages of the invention will result more clearly from the description and appended claims.

The invention can be better understood and implemented with reference to the attached drawings that illustrate an embodiment thereof by way of a non-limiting example, in which:

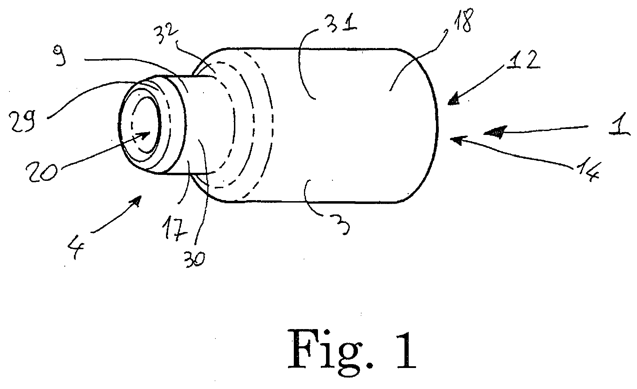

Figure 1 is a schematic perspective view of a connector element according to the invention;
Figure 2 is a rear view of the connector element of Figure 1;
Figure 3 is a longitudinal section view of the connector element taken along the plane III-III in Figure 2;
Figure 4 shows part of a switchgear apparatus including connector elements according to the invention, in an opening configuration in which the connector elements are disengaged from respective movable electrical connectors;
Figure 5 is a partially sectioned view of the switchgear apparatus in the opening configuration shown in Figure 4;
Figure 6 is an enlarged view of part of Figure 5, better showing a connector element according to the invention;
Figure 7 shows part of the switchgear apparatus in a closing configuration in which the connector elements are engaged with the respective movable electrical connectors;
Figure 8 is a partially sectioned view of the switchgear apparatus in the closing configuration shown in Figure 7;
Figure 9 is an enlarged view of part of Figure 8, better showing the connector element in the closing configuration;
Figure 10 shows an insulating block included in the switchgear for housing electrical connectors.

With reference to the attached Figures, a connector element 1 is shown which is particularly suitable to be used in the Medium Voltage field, i.e. for applications in the range of between 1 KV and some tens of KV, e.g. 30 kV. In particular, the connector element 1 is suitable to be mounted in Medium Voltage panels, indicated also as switchboards or switchgear, or in other Medium Voltage appliances. In the following description, in a non limitative way, reference is made to a switchgear apparatus 2 including a plurality of connector elements 1, for instance three connector elements 1, i.e. a number equal to the phases of a power line in which the switchgear apparatus 2 is installed.

The switchgear apparatus 2 comprises a circuit breaker unit 6, for example of the draw-out type, which is housed in a switchgear casing 50. The switchgear casing 4 comprises a stationary supporting frame 51 and has a front portion 52, accessible to an operator, and a rear portion 53.

The circuit breaker unit 6 is supported by a trolley 60 which is slidable in a direction S towards, and away from, the rear portion 53. On the circuit breaker unit 6 there are provided movable connectors 5, in particular lower movable connectors 5a, and upper movable connectors 5b. Each lower movable connector 5a is arranged for cooperating with a respective connector element 1 according to the invention, which is directly fixed to an electrical transformer 10, e.g. a current transformer, as will be described in greater detail later on. Each upper movable connector 5b is arranged for cooperating with a respective upper stationary connector 7, to which a primary power distribution is connected, via a respective bus-bar 8, for power flowing in the switchgear apparatus 2.

The connector elements 1, the upper stationary connectors 7, and the movable connectors 5 extend parallel to the direction S. The movable connectors 5 protrude from a rear side 19 of the circuit breaker unit 6 towards the rear portion 53 of the switchgear apparatus 2, whereas the connector elements 1 and the upper stationary connectors 7 protrude so as to face the rear side 19 of the circuit breaker unit 6. In particular, the movable connectors 5 extend so as to result coaxially aligned with the lower movable connectors 5a.

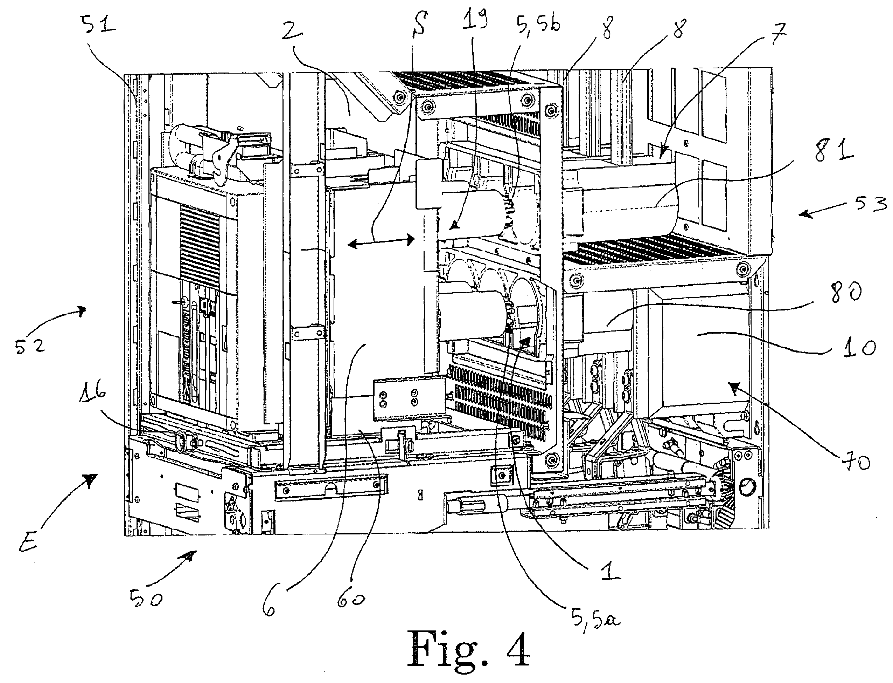

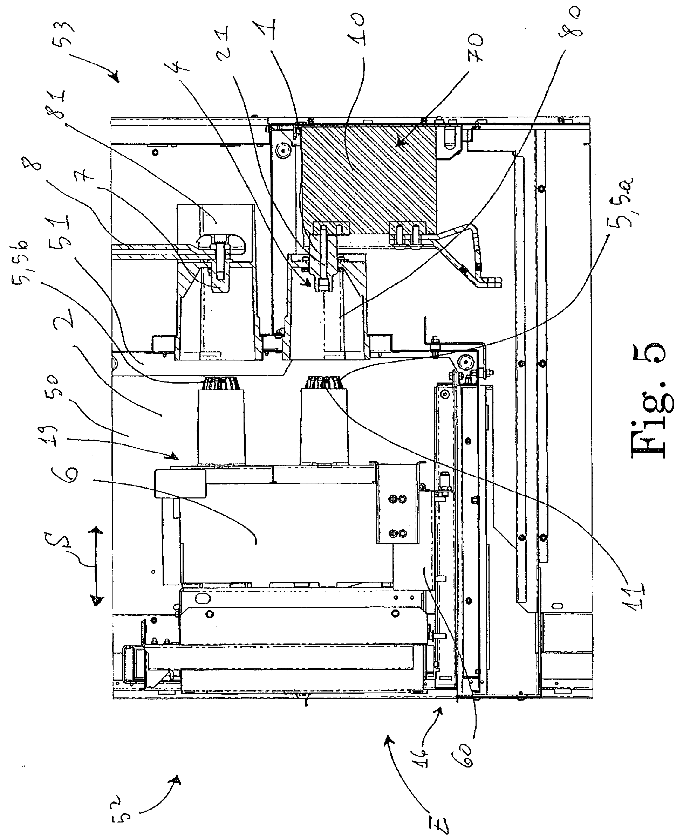

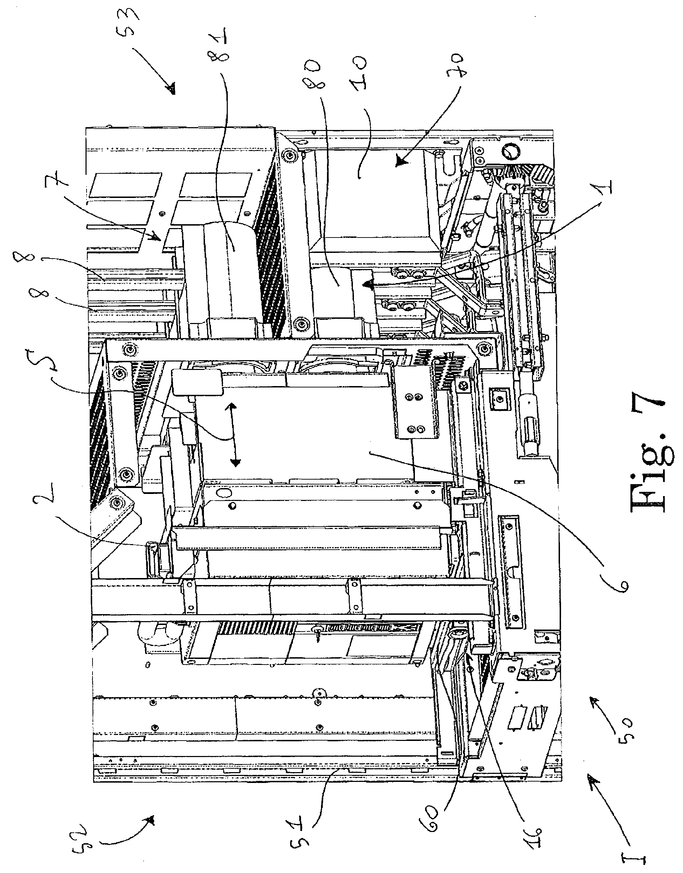

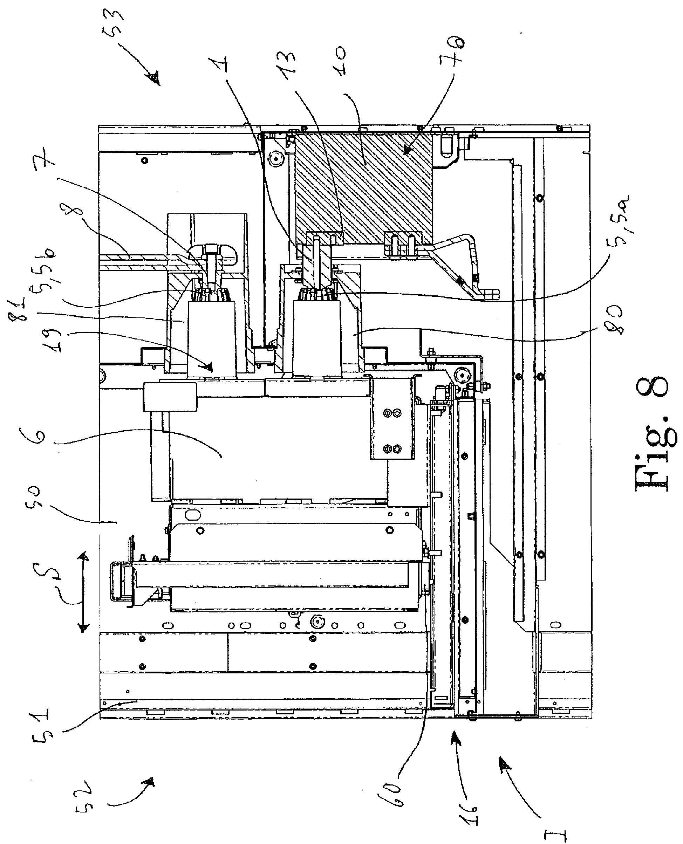

The circuit breaker unit 6, through the trolley 8, is movable from an extraction position E, shown in Figures 4, 5 and 6, in which the connector elements 1 are decoupled from the lower movable connectors 5a, to an insertion position I, shown in Figures 7, 8 and 9 in which the connector elements 1 are coupled with the lower movable electric contacts 5a.

The trolley 60 is coupled to a worm-screw which is drivable by a handle or any suitable tool connectable to a worm-screw end 16. By rotating the worm-screw through the handle, the trolley 60 can be moved, with respect to the switchgear casing 50, from the insertion position I to the extraction position E and/or vice-versa.

A more detailed description of the connector element 1 of the invention follows.

The connector element 1 comprises an electrically conducting body 3, having an oblong shape and extending along a longitudinal axis X for a total length LT. The connector element 1 is shaped as a shank element.

The electrically conductive body 3 is wholly made of a highly electrically conductive material. The electrically conductive body 3, in particular, is made of electrolytic copper, e.g. electrolytic copper.

The electrically conducting body 3 is delimited by a first end 4, which is suitable for interacting with a respective lower movable electrical connector 5a of the circuit breaker unit 6, and by a second end or fixing end 12 which is configured to be directly applied to a fitting portion 13 of the transformer 10.

In particular, the fixing end 12 comprises a plane fixing surface 14 suitable to be adhered to a resting surface 15 of said fitting portion 13 for the direct connection to the transformer 10. The plane fixing surface 14 is in particular substantially orthogonal to the longitudinal axis (X).

The electrically conducting body 3 comprises a first portion 17, extending from the first end 4, and a second portion 18 extending from the first portion 17 to the fixing end 12.

The first portion 17 and the second portion 18 are mutually coaxial.

In the first portion 17 there is obtained a coupling portion 9 which is particularly shaped for being embraced by a tulip-shaped end 11 of the lower movable connector 5a. The first portion 17 has externally a coupling surface 30 on which the
tulip-shaped end 11 abuts, whereas the second portion 18 has externally a heat-dissipating surface 31 which is arranged for transferring to the surrounding environment any heat arising in the connector element 1, thus preventing overheating of the latter. The coupling surface 30 and the heat-dissipating surface 31 are, in particular, cylindrically shaped.

The heat-dissipating surface 31 has a large area which ensures a high heat exchange with the environment. Although the heat-dissipating surface 31 has a large area, nevertheless his volume is relatively small, and overall dimensions of the connector element 1 are noticeably reduced with respect to the known electrical connectors which require proper additional and distinct heat-dissipating elements which have to be connected thereto in order to prevent overheating. Therefore, the connector element 1 according to the invention has also a more simplified structure compared with the known electrical connectors equipped with proper heat-dissipating elements.

Owing to the connector element 1, the overall dimensions of the switchgear apparatus 2 are reduced with respect to prior art.

The first portion 17 has a first cross-section C1 and extends parallel to the longitudinal axis X for a first length L1.

The second portion 18 has a second cross-section C2 and extends parallel to the longitudinal axis X for a second length L2. In particular, but in a non limitative way, the second length L2 is greater than the first length L1.

The second cross-section C2 has an area value which is greater than the area value of the first cross-section C1.

The first portion 17 and the second portion 18 have respectively a first external transverse dimension and a second external transverse dimension, measured transversely with respect to the longitudinal axis X, the second external transverse dimension being greater than the first external transverse dimension.

The first portion 17 and the second portion 18 are in particular, cylindrically shaped and have respectively a first external diameter D1 and a second external diameter D2, the second external diameter D2 being greater than the first external diameter D1.

A through-opening 20 is obtained in the electrically conductive body 3. The through-opening 20 extends parallel to the longitudinal axis X, in particular along the longitudinal axis X, across the first portion 17 and the second portion 18. Therefore, the first portion 17 and the second portion 18 are hollow portion.

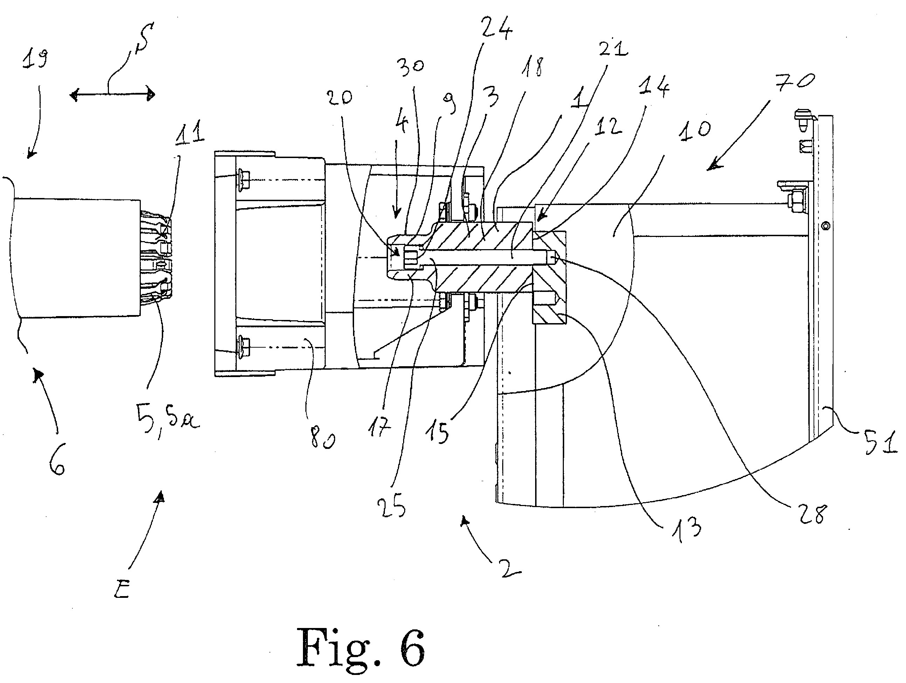

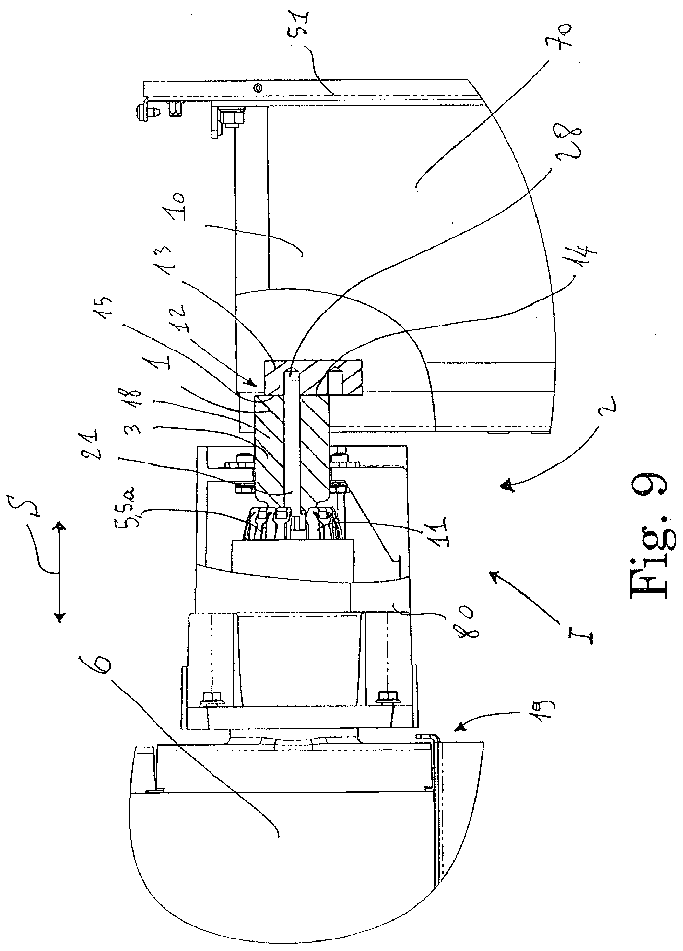

The through-opening 20 is suitable for housing a fixing element 21, such as a threaded screw 21, for fixing the connector element 1 directly to the transformer 10. A threaded hole 28 (shown in Figures 6 and 9) is obtained in the fitting portion 13 of the transformer 10 for firmly engaging with the fixing element 21.

The through-opening 20 comprises a first housing zone 22 obtained in the first portion 17 and a second housing zone 23 arranged in the second portion 18. The first housing zone 22 and the second housing zone 23 are in particular coaxial with one other and have a cylindrical shape. The first housing zone 22 has a third length L3, measured parallel to the longitudinal axis X, which, in a non limitative way, is less than the first length L1.

The first housing zone 22 is wider than the second housing zone 23. In particular, the first housing zone 22 has a first internal diameter D3 which is greater than a second internal diameter D4 of the second housing zone 23.

The first housing zone 22 is shaped for receiving a screw-head 24 of the threaded screw 21, whereas the second housing zone 23 is shaped for receiving a stud-portion 25 of screw-head 24, as shown in Figure 6.

The connector element 1 so configured can be mounted on the switchgear apparatus 2 in a very easy manner, only by means of a single fixing element 21. Owing to the fact that the connector element 1 is fixable directly to the transformer 10 and without any additional and interposed connecting elements such as a bus-bar, the overall dimensions of the switchgear apparatus 2 are kept low. Furthermore, such a direct connection of the connector element 1 to the transformer 10 enables to reduce the zones of junction between distinct conductive parts and thus significantly reduces the overall electrical contact resistance. This, advantageously, results in a much reduced heating of the connector element, in an optimal electrical conductivity and thus in energy saving.

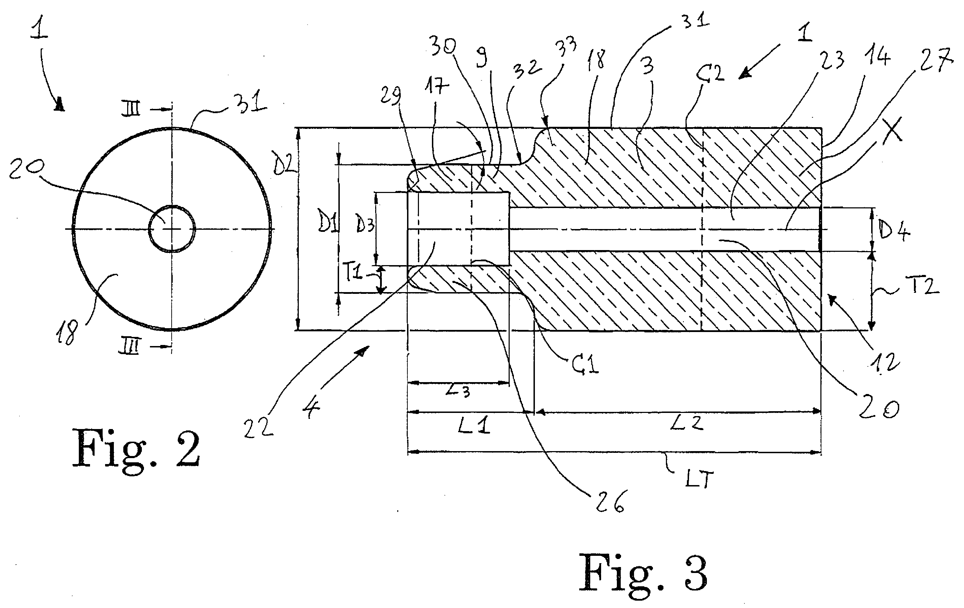

The first portion 17 and the second portion 18 are hollow and are defined respectively by a first annular wall 26 and by a second annular wall 27, as better shown in Figure 3. The first annular wall 26 and the second annular wall 27 have respectively a first thickness T1 and a second thickness T2, the second thickness T2 being greater than the first thickness T1. Owing to such a geometrical configuration, the first portion 17 and the second portion 18 are able to draw and dissipate any heat which may be generated by the electrical current flowing through the connector element 1 and through the movable connector 5a. More specifically, the second portion 18, owing to his second thickness T2 and his large heat-dissipating surface 31, acts as a heat dissipating element ensuring a high heat-exchange with the environment.

On the free end 4 of the first portion 17 there is obtained a rounded-off-edge 29, promoting coupling of the connector element 1 with the movable electrical connector 5a.

The coupling surface 30 and the heat-dissipating surface 31 are connected by a fillet zone 32, nearest to the first portion 17, and by a chamfered edge 33, nearest to the second portion 18.

The connector element 1, or the plurality of connector elements 1, together with the transformer 10, define an assembly 70 which has very reduced dimensions, with respect to the prior art where the bus-bars required for connecting the known connectors to the transformer imply large overall dimensions.

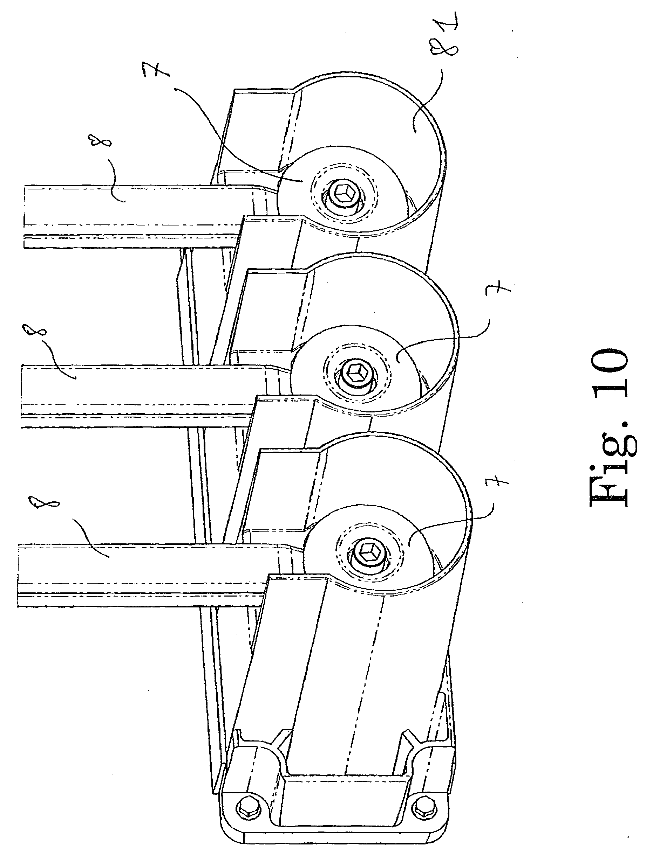

As shown in Figures 4 to 9, the switchgear apparatus 2 comprises a first housing block 80 for housing the connector elements 1 and a second housing block 81 for housing the upper stationary connectors 7 in a stationary position. Figure 10 shows better the second housing block 81 which is analogous to the first housing block 80. The first housing block 80 and the second housing block 81 are made of electrically insulating material, such as a plastics material.

The first housing block 80 and the second housing block 81 are fixed to the stationary supporting frame 51 by suitable fixing screws.

The first housing block 80, and analogously the second housing block 81, is so shaped as to reduce the distances separating the connector elements 1 from one other while preventing overheating in the surrounding zones, thus contributing to significantly reduce the overall dimensions of the switchgear apparatus 2.

The connector element 1 according to the invention above discussed fully achieves the intended aims of providing a connector element which is structurally simplified, easy to be mounted on a switchgear apparatus, able to efficiently prevent overheating. The connector element 1 is reliable, safe and able to ensure an optimal electrical conductivity, thus a noticeable electrical performance, and enables the overall dimensions of the switchgear apparatus to be reduced.

The connector element 1 is susceptible of modifications or variations all within the scope of the appended claims.

## Claims

1. A switchgear apparatus (2) **characterized in that** it comprises:
- an electrical transformer (10);
- a slidable circuit breaker unit (6) on which a movable electrical connector (5a) is fixed, wherein said slidable circuit breaker unit (6) is movable, along a direction (S) substantially parallel to a longitudinal axis (X), from an extraction position (E), in which said movable electrical connector (5a) is separated from an associated connector element (1), to an insertion position (I), in which said movable electrical connector (5a) is coupled with said connector element (1);
and **in that** said electrical connector element (1) comprises an electrically conducting body (3) extending along said longitudinal axis (X) and provided with a first cylindrically-shaped portion (17) having a first cross-section (C1), said first portion (17) having a first external surface (30) electrically coupling with said movable electrical connector (5a) when the circuit breaker unit (6) is in said insertion position (I), and a second cylindrically-shaped portion (18) coaxial with said first portion (17) and having a second cross-section (C2) which is greater than said first cross-section (C1) and extending from said first portion (17) to a fixing end (12) of said electrically conducting body (3), said second portion (18) having a second external surface (31) arranged for dissipating any heat arising from the passage of electric current, wherein said electrically conducting body (3) further comprises a through-opening (20) which extends parallel to said longitudinal axis (X) through said first portion (17) and said second portion (18) and houses a fixing element (21) directly fixing said electrically conducting body (3), through said fixing end (12), to said electrical transformer (10), and wherein said first portion (17) and said second portion (18) have a first transverse dimension (D1) and a second transverse dimension (D2), respectively, measured transversely with respect to said longitudinal axis (X), said second transverse dimension (D2) being greater than said first transverse dimension (D1).

2. A switchgear apparatus (2) according to claim 1, wherein a first thickness (T1) of said first portion (17) is less than a second thickness (T2) of said second portion (18).

3. A switchgear apparatus (2) according to any one of claims 1 to 2, wherein said first portion (17) has a first longitudinal dimension (L1) which is less than a second longitudinal dimension (L2) of said second portion (18).

4. A switchgear apparatus (2) according to any one of claims 1 to 3, wherein said through-opening (20) is defined by a first housing zone (22) arranged in said first portion (17), and by a second housing zone (23) arranged in said second portion (18), said first housing zone (22) having a first internal dimension (D3) which is greater than a second internal dimension (D4) of said second portion (18), said first internal dimension (D3) and said second internal dimension (D4) being measured transversely to said longitudinal axis (X).

5. A switchgear apparatus (2) according to claim 4, wherein said first external surface (30) and said second external surface (31) have a cylindrical shape.

6. A switchgear apparatus (2) according to any one of claims 1 to 5, wherein said fixing end (12) comprises a plane-fixing-surface (14) suitable to be adhered to a resting surface (15) of said electrical transformer (10), said plane fixing surface (14) being substantially orthogonal to said longitudinal axis (X).

7. A switchgear apparatus (2) according to any one of claims 1 to 6, wherein said first portion (17) has a free end (4) on which there is obtained a rounded-off-edge (29) which is shaped for promoting coupling of said connector element (1) with said movable electrical connector (5a), and said second portion (18) comprises a chamfered edge (33) opposite said fixing end (12), a fillet zone (32) connecting said first portion (17) to said second portion (18).

8. Switchgear apparatus (2) according to claim 1, further comprising a housing block (80) for housing said connector element (1), said housing block (80) being made of an electrically insulating material.

## Patentansprüche

1. Schaltvorrichtung (2), **dadurch gekennzeichnet, dass** sie aufweist:
einen elektrischen Transformator (10);
eine verschiebbare Hauptschaltereinheit (6), auf der ein beweglicher elektrischer Verbinder (5a) befestigt ist, wobei die verschiebbare Hauptschaltereinheit (6) entlang einer Richtung (S), die im Wesentlichen parallel zu einer Längsachse (X) ist, von einer Extraktionsposition (E), in der der bewegliche elektrische Verbinder (5a) von einem zugeordneten Verbinderelement (1) getrennt ist, zu einer Einführposition (I), in der der bewegliche elektrische Verbinder (5a) mit dem Verbinderelement (1) verbunden ist, bewegt werden kann;
und dass das elektrische Verbinderelement (1) einen elektrisch leitenden Körper (3) aufweist, der entlang der Längsachse (X) verläuft und mit einem ersten zylindrisch geformten Abschnitt (17) mit einem ersten Querschnitt (C1) versehen ist, wobei der erste Abschnitt (17) eine erste äußere Oberfläche (30) aufweist, die sich elektrisch mit dem beweglichen elektrischen Verbinder (5a) verbindet, wenn die Hauptschaltereinheit (6) in der Einführposition (I) ist, und mit einem zweiten zylindrisch geformten Abschnitt (18) versehen ist, der zu dem ersten Abschnitt (17) koaxial ist und einen zweiten Querschnitt (C2) aufweist, der größer ist als der erste Querschnitt (C1) und von dem ersten Abschnitt (17) zu einem Befestigungsende (12) des elektrisch leitenden Körpers (3) verläuft, wobei der zweite Abschnitt (18) eine zweite äußere Oberfläche (31) aufweist, die so angeordnet ist, dass sie jegliche Wärme ableitet, die aus dem Anliegen von elektrischem Strom herrührt, wobei der elektrisch leitende Körper (3) ferner eine Durchgangsöffnung (20) aufweist, die parallel zu der Längsachse (X) durch den ersten Abschnitt (17) und den zweiten Abschnitt (18) verläuft und ein Befestigungselement (21) beherbergt, das den elektrisch leitenden Körper (3) durch das Befestigungsende (12) zu dem elektrischen Transformator (10) direkt befestigt, und wobei der erste Abschnitt (17) und der zweite Abschnitt (18) eine erste transversale Länge (D1) und eine zweite transversale Länge (D2) aufweisen, die transversal mit Bezug auf die Längsachse (X) gemessen wird, wobei die zweite transversale Länge (D2) größer ist als die erste transversale Länge (D1).

2. Schaltvorrichtung (2) nach Anspruch 1, wobei eine erste Dicke (T1) des ersten Abschnitts (17) geringer ist als eine zweite Dicke (T2) des zweiten Abschnitts (18).

3. Schaltvorrichtung (2) nach einem der Ansprüche 1 bis 2, wobei der erste Abschnitt (17) eine erste Längslänge (L1) aufweist, die geringer ist als eine zweite Längslänge (L2) des zweiten Abschnitts (18).

4. Schaltvorrichtung (2) nach einem der Ansprüche 1 bis 3, wobei die Durchgangsöffnung (20) durch eine erste Gehäusezone (22) definiert ist, die in dem ersten Abschnitt (17) angeordnet ist, und durch eine zweite Gehäusezone (23), die in dem zweiten Abschnitt (18) angeordnet ist, wobei die erste Gehäusezone (22) eine erste innere Länge (D3) aufweist, die größer ist als eine zweite innere Länge (D4) des zweiten Abschnitts (18), wobei die erste innere Länge (D3) und die zweite innere Länge (D4) transversal zu der Längsachse (X) gemessen werden.

5. Schaltvorrichtung (2) nach Anspruch 4, wobei die erste äußere Oberfläche (30) und die zweite äußere Oberfläche (31) eine zylindrische Form aufweisen.

6. Schaltvorrichtung (2) nach einem der Ansprüche 1 bis 5, wobei das Befestigungsende (12) eine Ebenenbefestigungsoberfläche (14) aufweist, die geeignet ist, an einer Ruheoberfläche (15) des elektrischen Transformators (10) zu haften, wobei die Ebenenbefestigungsoberfläche (14) im Wesentlichen rechtwinklig zu der Längsachse (X) ist.

7. Schaltvorrichtung (2) nach einem der Ansprüche 1 bis 6, wobei der erste Abschnitt (17) ein freies Ende (4) aufweist, auf dem sich eine abgerundete Kante (29) befindet, die so geformt ist, dass sie ein Verbinden des Verbinderelements (1) mit dem beweglichen elektrischen Verbinder (5a) ermöglicht, und wobei der zweite Abschnitt (18) eine abgeschrägte Kante (33), die sich dem Befestigungsende (12) gegenüber befindet, und eine Stegzone (32), die den ersten Abschnitt (17) mit dem zweiten Abschnitt (18) verbindet, aufweist.

8. Schaltvorrichtung (2) nach Anspruch 1, ferner aufweisend einen Gehäuseblock (80) zum Aufnehmen des Verbinderelements (1), wobei der Gehäuseblock (80) aus einem elektrisch isolierenden Material besteht.

## Revendications

1. Appareil de commutation (2) **caractérisé en ce qu'**il comprend :
- un transformateur électrique (10) ;
- une unité de disjoncteur coulissante (6) sur laquelle un connecteur électrique mobile (5a) est fixé, où ladite unité de disjoncteur coulissante (6) peut se déplacer, le long d'une direction (S) essentiellement parallèle à un axe longitudinal (X), d'une position d'extraction (E), dans laquelle ledit connecteur électrique mobile (5a) est séparé d'un élément de connecteur (1) associé, à une position d'insertion (I), dans laquelle ledit connecteur électrique mobile (5a) est couplé audit élément de connecteur (1) ;
et **en ce que** ledit élément de connecteur électrique (1) comprend un corps électriquement conducteur (3) s'étendant le long dudit axe longitudinal (X) et pourvu d'une première partie de forme cylindrique (17) ayant une première section transversale (C1), ladite première partie (17) ayant une première surface externe (30) s'accouplant électriquement avec ledit connecteur électrique mobile (5a) lorsque l'unité de disjoncteur (6) est dans ladite position d'insertion (I), et d'une deuxième partie de forme cylindrique (18) coaxiale à ladite première partie (17) et ayant une deuxième section transversale (C2) qui est plus grande que ladite première section transversale (C1) et s'étendant à partir de ladite première partie (17) jusqu'à une extrémité de fixation (12) dudit corps électriquement conducteur (3), ladite deuxième partie (18) ayant une deuxième surface externe (31) agencée pour dissiper toute chaleur résultant du passage d'un courant électrique, où ledit corps électriquement conducteur (3) comprend en outre une ouverture traversante (20) qui s'étend parallèlement audit axe longitudinal (X) à travers ladite première partie (17) et ladite deuxième partie (18) et qui reçoit un élément de fixation (21) fixant directement ledit corps électriquement conducteur (3), à travers ladite extrémité de fixation (12), audit transformateur électrique (10), et où ladite première partie (17) et ladite deuxième partie (18) ont une première dimension transversale (D1) et une deuxième dimension transversale (D2), respectivement, mesurées transversalement audit axe longitudinal (X), ladite deuxième dimension transversale (D2) étant supérieure à ladite première dimension transversale (D1).

2. Appareil de commutation (2) selon la revendication 1, dans lequel une première épaisseur (T1) de ladite première partie (17) est inférieure à une deuxième épaisseur (T2) de ladite deuxième partie (18).

3. Appareil de commutation (2) selon l'une quelconque des revendications 1 à 2, dans lequel ladite première partie (17) a une première dimension longitudinale (L1) qui est inférieure à une deuxième dimension longitudinale (L2) de ladite deuxième partie (18).

4. Appareil de commutation (2) selon l'une quelconque des revendications 1 à 3, dans lequel ladite ouverture traversante (20) est définie par une première zone de logement (22) agencée dans ladite première partie (17), et par une deuxième zone de logement (23) agencée dans ladite deuxième partie (18), ladite première zone de logement (22) ayant une première dimension interne (D3) qui est supérieure à une deuxième dimension interne (D4) de ladite deuxième partie (18), ladite première dimension interne (D3) et ladite deuxième dimension interne (D4) étant mesurées transversalement audit axe longitudinal (X).

5. Appareil de commutation (2) selon la revendication 4, dans lequel ladite première surface externe (30) et ladite deuxième surface externe (31) ont une forme cylindrique.

6. Appareil de commutation (2) selon l'une quelconque des revendications 1 à 5, dans lequel ladite extrémité de fixation (12) comprend une surface de fixation plane (14) appropriée pour adhérer à une surface d'appui (15) dudit transformateur électrique (10), ladite surface de fixation plane (14) étant essentiellement orthogonale audit axe longitudinal (X).

7. Appareil de commutation (2) selon l'une quelconque des revendications 1 à 6, dans lequel ladite première partie (17) a une extrémité libre (4) sur laquelle on obtient un bord arrondi (29) qui est mis en forme pour favoriser l'accouplement dudit élément de connecteur (1) audit connecteur électrique mobile (5a), et ladite deuxième partie (18) comprend un bord chanfreiné (33) opposé à ladite extrémité de fixation (12), une zone de congé (32) reliant ladite première partie (17) à ladite deuxième partie (18).

8. Appareil de commutation (2) selon la revendication 1, comprenant en outre un bloc de logement (80) pour recevoir ledit élément de connecteur (1), ledit bloc de logement (80) étant réalisé en un matériau électriquement isolant.
